## Europäisches Patentamt

## European Patent Office

## Office européen des brevets

(19)

(11) Numéro de publication: **0 024 991**
**B1**

(12) **FASCICULE DE BREVET EUROPEEN**

(45) Date de publication du fascicule du brevet: **23.11.83**

(51) Int. Cl.³: **G 01 N 27/90**

(21) Numéro de dépôt: **80401222.7**

(22) Date de dépôt: **27.08.80**

(54) **Dispositif de détection des défauts d'une plaque métallique au moyen de courants de Foucault, et procédé utilisant ce dispositif.**

(30) Priorité: **28.08.79 FR 7921495**

(43) Date de publication de la demande:
**11.03.81 Bulletin 81/10**

(45) Mention de la délivrance du brevet:
**23.11.83 Bulletin 83/47**

(84) Etats contractants désignés:
**BE CH DE FR GB IT LI SE**

(56) Documents cités:
**FR - A - 2 107 031**
**FR - A - 2 361 647**
**US - A - 3 736 501**
**US - A - 4 134 067**
**US - A - 4 142 154**

(73) Titulaire: **Framatome**
**Tour Fiat 1 place de la Coupole**
**F-92400 Courbevoie (FR)**

(72) Inventeur: **Lecomte, Jean-Claude**
**Domaine du Congé Saint-Vallerin**
**F-71390 Buxy (FR)**

(74) Mandataire: **Dupuy, Louis et al.**
**CREUSOT-LOIRE 15 rue Pasquier**
**F-75383 Paris Cedex 8 (FR)**

Courier Press, Leamington Spa, England.

Dispositif de détection des défauts d'une plaque métallique au moyen de courants de Foucault,
et procédé utilisant ce dispositif

L'invention concerne l'utilisation des courants de Foucault pour le contrôle d'une plaque métallique munie d'au moins un alésage dans lequel est serti un tube.

Elle est surtout destinée à s'appliquer au contrôle d'une plaque tubulaire de générateur de vapeur.

On a déjà utilisé les courants de Foucault pour le contrôle des tubes des générateurs de vapeur: sur le site, les tubes des générateurs de vapeur sont contrôlés au moyen de courants de Foucault avec des sondes internes, lors de la visite complète initiale des chaudières et des inspections ultérieures en service. Le contrôle est entièrement automatisé, ce qui permet de limiter au maximum l'exposition du personnel au rayonnement ionisant: l'automate permet le positionnement de la sonde à l'entrée de chaque tube sur la plaque tubulaire, l'introduction de la sonde dans les tubes, l'extraction de la sonde à vitesse constante, l'acquisition des données sur bandes graphiques et magnétiques. On utilise pour l'introduction de la sonde dans les tubes un dispositif de positionnement sélectif tel que celui qui est décrit dans le brevet français 2.309.314 au nom de la demanderesse.

Si le contrôle des tubes de générateurs de vapeur est permis par un certain nombre de méthodes connues, en particulier par les courants de Foucault, on ne connaît pas jusqu'à présent de méthode de contrôle d'une zone située au-delà des tubes, à savoir la plaque tubulaire.

D'autre part, les méthodes utilisées pour la détection des défauts des tubes ont été, la plupart du temps, orientées vers la détection de fissures longitudinales, s'étendant selon l'axe du tube. Elles ne détectent pas les fissures transversales.

On cannaît par le brevet américain 4.142.154, un dispositif de contrôle d'un alésage au moyen de courants de Foucault à l'aide d'une sonde déplaçable en translation et en rotation à l'intérieur d'un tube et plaquée contre la paroi interne du tube par l'effet ressort d'une entaille en V du support de la sonde. Ledit tube fait partie intégrante du dispositif de contrôle et ses caractéristiques sont spécifiques de l'alésage à contrôler. Un tel dispositif ne permet pas le contrôle d'une plaque dans laquelle est déjà serti un tube, telle qu'une plaque tubulaire de générateur de vapeur. En outre, il ne permet pas de contrôler rapidement des alésages de diamètres différents les uns des autres ou de diamètre important.

On cannaît d'autre part, par le brevet américain n° 3.736.501, un dispositif de contrôle de la surface externe d'une tige ou d'un tube métallique au moyen de sondes approchées de la tige ou du tube par la force centrifuge exercée sur des masselottes agissant sur une triangulation déformable. Si ce dispositif est intéressant pour le contrôle de la surface externe d'un tube, son encombrement important empêche son utilisation à l'intérieur d'un tube.

Les deux brevets américains précités ne permettent donc pas le contrôle d'une plaque tubulaire.

La présente invention tente de combler cette lacune. Elle vise un dispositif de détection au moyen de courants de Foucault des défauts d'une plaque métallique munie d'au moins un alésage dans lequel est serti un tube; ce dispositif de détection comprend:

— une sonde différentielle comportant deux bobinages dont les axes sont situés dans des plans parallèles au plan de la plaque et qui sont reliés électriquement à un dispositif de génération et de traitement de signaux,
— un dispositif de déplacement de la sonde dans l'alésage en translation le long de l'axe de l'alésage et en rotation autour de celui-ci, constitué par un axe de transmission relié d'une part à la sonde à l'intérieur de l'alésage et d'autre part à des organes moteurs à l'extérieur de l'alésage.

Selon l'invention la sonde est constituée par un corps de sonde sur lequel est articulé un bras de levier à l'extrémité duquel sont montés les deux bobinages et susceptibles de se déplacer sous l'effet de la force centrifuge de façon à venir s'appliquer contre la paroi interne du tube serti dans l'alésage.

Dans un mode préféré de réalisation de l'invention, le bras de levier est articulé au corps de sonde autour d'un axe unique, parallèle au plan de la plaque; mais il est également possible d'articuler le bras de levier autour de deux axes parallèles au plan de la plaque et perpendiculaires entre eux.

Pour renforcer l'effet de la force centrifuge, on peut munir la sonde d'un ressort d'écartement du bras de levier par rapport à l'axe de notation du corps de sonde.

De préférence, le dispositif de traitement de signaux comporte un filtre programmable dont la commande est asservie à la vitesse de rotation de la sonde.

L'invention a également pour objet un procédé de détection au moyen de courants de Foucault, des défauts d'une plaque métallique munie d'au moins au alésage, utilisant un dispositif selon l'invention.

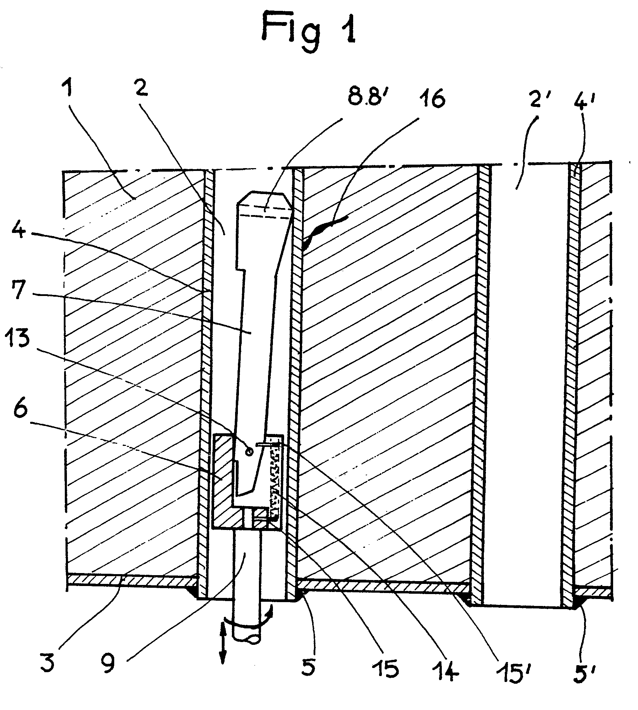

L'invention va maintenant être décrite avec plus de détails en se référant plus particulièrement à un mode de réalisation particulier donné uniquement à titre d'exemple et représenté par la figure 1 annexée, qui montre, en coupe, une plaque métallique munie d'alésages et pourvue, pour l'un des alésages, d'un dispositif de détection selon l'invention.

Le repère 1 de la figure 1 désigne une plaque métallique. Cette plaque peut par exemple être la plaque tubulaire d'un générateur de vapeur dans une centrale nucléaire à eau sous pression. On pourra se reporter par exemple au brevet français n° 2.309.314 au nom de la Demanderesse: sur la figure 1 de cette demande de brevet le repère 5 représente une telle plaque tubulaire.

En se reportant de nouveau à la figure de la présente demande, on voit que la plaque 1 comporte des alésages 2 et 2'. La plaque 1 a été recouverte d'une couche d'Inconel 3 et dans les alésages 2 et 2' ont été sertis des tubes d'Inconel 4 et 4'. Ces tubes sont soudés aux points 5 et 5' puis dudgeonnés. Les tubes 4 et 4' sont représentés débouchant de l'alésage 2 mais ils pourraient aussi être rentrants.

Les défauts à détecter peuvent être des fissures ou des amorces de fissures débouchant dans l'alésage 2 ou à proximité de celui-ci, ces fissures étant radiales par rapport à l'axe du tube 4. Les défauts à détecter peuvent également être des décollements entre la plaque 1 et le recouvrement d'Inconel 3, débouchant dans l'alésage 2 ou à proximité.

Le dispositif de détection comporte une sonde constituée par un corps de sonde 6 jouant le rôle de précentreur dans lequel est monté un élément mobile 7 supportant deux bobinages 8 et 8' qui entourent chacun une ferrite. L'élément mobile 7 est plus précisément constitué par un bras de levier articulé au corps de sonde 6 autour d'un axe 13 parallèle au plan de la plaque 1. (Dans une variante de réalisation, le bras 7 pourrait être articulé autour de deux axes perpendiculaires entre eux: on donnerait à la sonde encore un degré de liberté supplémentaire).

Un axe de transmission 9 relié d'une part à la sonde et d'autre part à des organes moteurs non représentés constitue un dispositif de déplacement de la sonde en translation le long de l'axe du tube 4 et en rotation autour de cet axe. L'homme de l'art pourra facilement choisir les organes moteurs adéquats, par exemple un système vis-écrou.

Les deux bobinages 8 et 8' sont reliés électriquement à un dispositif de génération et de traitement de signaux tel que ceux utilisés habituellement dans les dispositifs de détection par courants de Foucault. Les câbles de liaison (non représentés) passent par l'intérieur de l'axe 9.

Le bras de levier 7 se déplace sous l'effet de la force centrifuge résultant de la rotation de l'axe 9 de sorte que son extrémité portant les bobinages 8 et 8' vient s'appliquer contre la paroi intérieure du tube 4. L'entrefer entre la sonde et les parois de l'alésage est donc maintenu constamment égal à l'épaisseur du tube 4.

Pour renforcer la force exercée sur l'extrémité du bras de levier on a placé un ressort 14 attaché d'une part au corps de sonde 6, par l'une de ses extrémités 15, et d'autre part au bras de levier 7 par sa deuxième extrémité 15'. Le ressort 14 est tendu et exerce sur le bras de levier 7, au point 15', une force F qui fait tourner la bras de levier 7 autour de son axe d'articulation 13 et applique ainsi la partie du bras de levier 7 portant les bobinages 8 et 8' contre la paroi du tube 4.

Les bobinages 8 et 8' ont été représentés sur la figure 1 avec des axes parallèles et situés dans le même plan de révolution. Une telle sonde du type differentiel, est utilisée pour détecter des défauts tels que la fissure radiale 16.

On pourrait également placer les bobinages de la sonde dans des plans différents; une telle sonde serait alors utilisée pour la détection des défauts d'adhérence entre la plaque 1 et le recouvrement 3, qui débouchent dans l'alésage ou à proximité de celui-ci.

Les différentes sortes de bobinages sont prévues pour être interchangeables de façon à pouvoir détecter alternativement et rapidement les deux sortes de défauts.

Comme pour le contrôle des tubes de générateurs de vapeur, on utilise des courants de Foucault multifréquences. En effet, un appareil monofréquence n'a pas la possibilité d'extraire la totalité de l'information contenue dans chaque signal.

Le dispositif de génération et de traitement des signaux est le même que pour le contrôle des tubes. Il est situé à l'extérieur du générateur de vapeur, en dehors de la zone de radioactivité dangereuse. La chaine de traitement des signaux comporte un filtre programmable dont la commande est asservie à la vitesse de rotation de la sonde. Tous les résultats sont enregistrés sur bandes magnétiques et sur enregistreurs papiers.

Pour placer la sonde, on utilise un dispositif à positionnement sélectif tel que celui décrit dans le brevet français n° 2.309.314, de préférence à commande automatique; on peut ainsi contrôler la plaque 1 toute entière en plaçant la sonde successivement dans tous les trous.

**Revendications**

1. Dispositif de détection au moyen de courants de Foucault des défauts (16) d'une plaque métallique (1) munie d'au moins un alésage (2) dans lequel est serti un tube (4), comprenant:

— une sonde différentielle comportant deux bobinages (8) et (8') done les axes sont situés dans des plans parallèles au plan de la plaque (1) et qui sont reliés électriquement à un dispositif de génération et de traitement de signaux,
— un dispositif de déplacement de la sonde dans l'alésage (2) en translation le long de l'axe de l'alésage (2) et en rotation autour de celui-ci, comportant un axe transmission (9) relié d'une part à la sonde à l'intérieur de l'alésage (2) et d'autre part à des organes moteurs à l'extérieur de l'alésage (2),

caractérisé par le fait que la sonde est constituée par un corps de sonde (6) sur lequel est articulé un bras de levier (7) à l'extrémité duquel sont montés les deux bobinages (8) et (8') et susceptible de se déplacer sous l'effet de la force centrifuge de façon à venir s'appliquer contre la paroi interne du tube (4) serti dans l'alésage (2).

2. Dispositif de détection selon la revendication 1, caractérisé par le fait que le bras de levier (7) est articulé au corps de sonde (6) autour d'un axe (13) parallèle au plan de la plaque (1).

3. Dispositif de détection selon la revendication 1, caractérisé par le fait que le bras de levier (7) est articulé au corps de sonde (6) autour de deux axes parallèles au plan de la plaque (1) et perpendiculaires entre eux.

4. Dispositif de détection selon l'une revendications précédentes, caractérisé par le fait que la sonde comporte un ressort (14) d'écartement du bras de levier (7) par rapport à l'axe de rotation corps de sonde (6).

5. Dispositif de détection selon l'une des revendications précédentes, caractérisé par le fait que le dispositif de traitement de signaux comporte un filtre programmable dont la commande est asservie à la vitesse de rotation de la sonde.

6. Procédé de détection au moyen de courants de Foucault, des défauts d'une plaque (1) munie d'au moins un alésage (2) dans lequel est serti un tube (4), caractérisé par le fait que l'on utilise un dispositif selon l'une des revendications précédentes.

**Patentansprüche**

1. Wirbelstrom-Suchvorrichtung für Fehler (16) auf einer Metallplatte (1) mit mindestens einer Bohrung (2) in welcher ein Rohr (4) eingesetzt ist, bestehend aus:

— einer Differentialsonde mit zwei Wicklungen (8) und (8'), deren Achsen in Parallelebenen zur Ebene der Platte (1) liegen, und die mit einer Vorrichtung zur Signalerzeugung und -verarbeitung elektrisch verbunden sind,
— aus einer Vorrichtung zum Verfahren der Sonde in der Bohrung (2) in Längsrichtung entlang der Achse der Bohrung (2) und in Drehrichtung um diese herum, mit einer Übertragungswelle (9), welche einerseits mit der Sonde im Inneren der Bohrung (2) und anderseits mit Antriebsmitteln außerhalb der Bohrung (2) verbunden ist,

dadurch gekennzeichnet, daß die Sonde aus einem Sondenkörper (6) mit einem angelenkten Hebelarm (7) besteht, an dessen Ende die beiden Wicklungen (8) und (8') montiert sind, und der unter der Wirkung der Zentrifugalkraft derart verschoben werden kann, daß er an der Innenwand des in die Bohrung (2) eingesetzten Rohres (4) zur Anlage kommt.

2. Suchvorrichtung nach Anspruch 1, dadurch gekennzeichnet, daß der Hebelarm (7) an dem Sondenkörper (6) um eine zur Ebene der Platte (1) parallelen Achse (13) angelenkt ist.

3. Suchvorrichtung nach Anspruch 1, dadurch gekennzeichnet, daß der Hebelarm (7) an dem Sondenkörper (6) um zwei senkrecht zueinander und zur Ebene der Platte (1) parallelen Achsen angelenkt ist.

4. Suchvorrichtung nach einem der vorhergehenden Ansprüche, dadurch gekennzeichnet, daß die Sonde eine Feder (14) aufweist, um den Hebelarm (7) gegenüber der Drehachse (9) des Sondenkörpers (6) zu spreizen.

5. Suchvorrichtung nach einem der vorhergehenden Ansprüche, dadurch gekennzeichnet, daß die Vorrichtung zur Signalverarbeitung einen programmierbaren Filter aufweist, dessen Steuerung durch die Drehgeschwindigkeit der Sonde geregelt wird.

6. Wirbelstrom-Suchverfahren der Fehler einer Platte (1) mit mindestens einer Bohrung (2), in welcher ein Rohr (4) eingesetzt ist, dadurch gekennzeichnet, daß eine Vorrichtung nach einem der vorhergehenden Ansprüche zur Anwendung kommt.

**Claims**

1. Device for detecting, by means of eddy currents, the defects (16) in a metal plate (1) provided with at least one bore (2) in which a tube (4) is inserted, comprising a differential probe incorporating two windings (8) and (8'), the axes of which are arranged in planes parallel to the plane of the plate (1) and which are connected electrically to a device for generating and processing signals, and a device for removing the probe in the bore (2) in translation along the axis of the bore (2) and in rotation about the latter, incorporating a transmission shaft (9) connected, on the one hand, to the probe inside the bore (2) and, on the other hand, to drive means outside the bore (2), characterised in that the probe consists of a probe body (6) on which is hinged a lever arm (7), at the end of which the two windings (8) and (8') are mounted and which is capable of moving under the effect of centrifugal force so as to come up against the inner wall of the tube (4) inserted in the bore (2).

2. Detection device according to Claim 1, characterised in that the lever arm (7) is hinged to the probe body (6) about a pin (13) parallel to the plane of the plate (1).

3. Detection device according to Claim 1, characterised in that the lever arm (7) is hinged to the probe body (6) about two pins parallel to the plane of the plate (1) and perpendicular to one another.

4. Detection device according to one of the preceding claims, characterised in that the probe incorporates a spring (14) for deflecting the lever arm (7) in relation to the axis of rotation (9) of the probe body (6).

5. Detection device according to one of the preceding claims, characterised in that the signal-processing device comprises a programmable filter, the control of which is governed by the rotational speed of the probe.

6. Process for detecting, by means of eddy currents, the defects in a plate (1) provided with at least one bore (2) in which a tube (4) is inserted, characterised in that a device according to one of the preceding claims is used.

# Fig 1